# EUROPÄISCHE PATENTSCHRIFT

(11) **EP 0 985 838 B1**
(45) Veröffentlichungstag und Bekanntmachung des Hinweises auf die Patenterteilung: **09.10.2002**
(21) Anmeldenummer: 99109420.2
(22) Anmeldetag: 11.05.1999
(51) Int. Cl.: F16C 27/06

(54) **Stützlager und Verfahren zu seiner Herstellung**
Bearing and method for its manufacturing
Palier et méthode pour sa fabrication

(30) Priorität: 11.09.1998 DE 19841882
(43) Veröffentlichungstag der Anmeldung: 15.03.2000
(73) Patentinhaber: Carl Freudenberg KG, 69469 Weinheim (DE)
(72) Erfinder: Bade, Karl-Heinz, 69483 Waldmichelbach (DE); Schütz, Michael, 79418 Schliegen (DE)

(56) Entgegenhaltungen:
- EP-A- 0 585 530
- US-A- 3 719 060
- US-A- 5 547 174

## Beschreibung

### Technisches Gebiet

Die Erfindung betrifft ein Verfahren zur Herstellung eines Stützlagers, umfassend einen Innenring, der mit radialem Abstand von einem Außenring umschlossen ist, wobei der Innen- und der Außenring durch einen in dem durch den Abstand gebildeten Spalt angeordneten Zwischenring aus gummielastischem Werkstoff verbunden sind. Die Erfindung betrifft auch ein mittels dieses Verfahrens hergestelltes Stützlager.

### Stand der Technik

Ein solches Stützlager ist beispielsweise aus der DE 20 61 625 B2 bekannt. Das vorbekannte Lager gelangt als Zwischenlager für die Gelenkwelle von Kraftfahrzeugen zur Anwendung, wobei der Zwischenring durch mehrere, in Umfangsrichtung gleichmäßig verteilte Stegkörper aus gummielastischem Werkstoff gebildet ist. Die Stegkörper erstrecken sich zwischen dem Innen- und dem Außenring sowohl im Längsschnitt als auch im Querschnitt betrachtet in radialer Richtung, wobei zwischen den in Umfangsrichtung mit Abstand benachbarten Stegkörpern jeweils ein Anschlagpuffer angeordnet ist, der am äußeren Stützring festgelegt ist, sich in radialer Richtung nach innen erstreckt und dem Innenring im schwingungsfreien Zustand mit einem radialen Abstand benachbart zugeordnet ist. Dabei ist allerdings zu beachten, daß die Gebrauchseigenschaften des vorbekannten Lagers während einer langen Gebrauchsdauer wenig zufriedenstellend sind. Im Anschluß an den Herstellungsprozeß und während der bestimmungsgemäßen Verwendung des Lagers treten innerhalb des Zwischenrings, der aus den Stegkörpern besteht, gebrauchsdauerverringernde Zugspannungen auf, die zu einem vorzeitigen Ausfall des Lagers führen können.

Aus der US 3,719,060 ist ein weiteres Stützlager bekannt. Das vorbekannte Stützlager ist zur Verwendung bei Wellenkupplungen vorgesehen und besteht aus einem metallischen Innenring, der von einem metallischen Außenring umschlossen ist, wobei der Innen- und der Außenring durch eine scheibenförmige Zwischenschicht aus Gummi miteinander verbunden sind. Die Aufgabe, die durch das vorbekannte Bauteil gelöst werden soll, wird u.a. darin gesehen, Zugspannungen in der Zwischenschicht aus Gummi zu vermeiden. Der Außenring weist konische Bindungsflächen auf, wobei die herstellungsbedingt sich ergebenden Zugspannungen innerhalb der Zwischenschicht aus Gummi dadurch aufgehoben oder in eine Druckvorspannung umgewandelt werden, dass die im Anschluß an die Herstellung des Bauteils axial zueinander verschobenen Außen- und Innenringe soweit axial verschoben werden, bis die herstellungsbedingt parallelogrammförmige Zwischenschicht aus Gummi, im Längsschnitt betrachtet, im Wesentlichen rechteckförmig ist. Die axiale Verschiebung von Außen- und Innenring relativ zueinander ist in einem separaten Arbeitsgang vorzunehmen, beispielsweise während des Einbaus des Bauteils.

### Darstellung der Erfindung

Der Erfindung liegt die Aufgabe zugrunde, ein Stützlager und ein Verfahren zu seiner Herstellung derart weiterzuentwickeln, daß der Zwischenring herstellungsbedingt - auch ohne Kalibrierung des Innen- und/ oder des Außenrings - frei von Zugspannungen ist.

Diese Aufgabe wird erfindungsgemäß mit den Merkmalen von Anspruch 1 und durch die Merkmale von Anspruch 3 gelöst. Auf vorteilhafte Weiterbildungen/Ausgestaltungen nehmen die auf die Ansprüche 1 und 3 rückbezogenen Ansprüche Bezug.

Zur Lösung der Aufgabe ist es vorgesehen, daß der Innen- und der Außenring mit einem dem herstellungsbedingten Schrumpf entsprechenden axialen Versatz in einem Vulkanisationswerkzeug eingelegt werden, daß der Zwischenring um den axialen Versatz zu einer gedachten Radialebene geneigt mit Innen- und Außenring vulkanisiert wird, daß das vulkanisierte Stützlager aus dem Vulkanisationswerkzeug entnommen wird und daß der axiale Versatz zwischen Innenund Außenring durch den herstellungsbedingt geneigten Zwischenring während seiner Abkühlung und Verfestigung schrumpfbedingt vollständig ausgeglichen wird. Der Zwischenring, der durch das erfindungsgemäße Verfahren hergestellt ist, ist frei von radialen Zugspannungen und weist dadurch gleichbleibend gute Gebrauchseigenschaften während einer langen Gebrauchsdauer auf. Durch ein herstellungsbedingtes Schrumpfen des Zwischenrings im Anschluß an die Entnahme des Stützlagers aus dem Vulkanisationswerkzeug entstehen innerhalb des Zwischenrings keine Zugspannungen, im Gegensatz zu vulkanisierten Zwischenringen, die in axialer Richtung nicht geneigt sind und bei denen der Innen- sowie der Außenring ohne axialen Versatz zueinander angeordnet sind. Durch den Schrumpf des Zwischenrings wird bei dem erfindungsgemäßen Stützlager der axiale Versatz von Innen- und Außenring zueinander selbsttätig und vollständig ausgeglichen.

Gelangt das Stützlager beispielsweise als Kardanwellenlager in Kraftfahrzeugen zur Anwendung, können der Innen- und der Außenring mit einem axialen Versatz von 0,1 bis 0,5 mm in das Vulkanisationswerkzeug eingelegt werden. Dieser Versatz wird durch den Schrumpf des Zwischenrings im Anschluß an seine Vulkanisation vollständig ausgeglichen, so daß sich der Zwischenring, dem Längsschnitt des Stützlagers betrachtet, radial zwischen dem Innen- und dem Außenring erstreckt. Dadurch, daß der Zwischenring bereits herstellungsbedingt keine gebrauchsdauerverringernde Zugspannungen aufweist, ist eine Kalibrierung des Innen- und/ oder Außenrings im Anschluß an die Vulkanisation entbehrlich.

Die Größe des Schrumpfs ist im wesentlichen abhängig vom verwendeten Werkstoff und der Materialstärke des Zwischenrings.

Außerdem betrifft die Erfindung ein Stützlager, hergestellt nach dem zuvor beschriebenen Verfahren, umfassend einen Innenring, der mit radialem Abstand von einem Außenring umschlossen ist, wobei der Innen- und der Außenring durch einen in dem durch den Abstand gebildeten Spalt angeordneten Zwischenring aus gummielastischem Werkstoff verbunden sind.

Zur Lösung der Aufgabe ist es vorgesehen, daß der Zwischenring - im Längsschnitt betrachtet - herstellungsbedingt eine größere Länge aufweist, als im gebrauchsfertigen Zustand. Herstellungsbedingt, d. h. unmittelbar nach der Entnahme des Stützlagers aus dem Vulkanisationswerkzeug vor der Abkühlung und Verfestigung des Zwischenrings, sind der Innenring und der Außenring in axialer Richtung zueinander versetzt und der Zwischenring zwischen Innenund Außenring um den axialen Versatz zu einer gedachten Radialebene geneigt. Während der Abkühlung und Verfestigung des Zwischenrings verringert sich die Länge des Zwischenrings schrumpfbedingt, bis der Zwischenring im gebrauchsfertigen, d. h. vollständig erkalteten und verfestigten Zustand des Zwischenrings, sich nur in radialer Richtung erstreckt und mit Innen- und Außenring in einer Radialebene angeordnet ist.

In den meisten Anwendungsfällen hat es sich als vorteilhaft bewährt, wenn das Verhältnis der herstellungsbedingten Länge zur Länge im gebrauchsfertigen Zustand 1,05 bis 1,15 beträgt. Abhängig vom verwendeten Werkstoff und der Materialstärke des Bauteils ist dadurch sichergestellt, daß der Zwischenring im gebrauchsfertigen Zustand frei von radialen Zugspannungen ist.

Der Zwischenring kann durch zumindest zwei in Umfangsrichtung verteilte Stegkörper gebildet sein, die durch einen Umfangsabstand getrennt sind, wobei die Stegkörper in Umfangsrichtung durch sich parallel zu der Stirnfläche eines benachbarten Stegkörpers erstreckende Stirnflächen begrenzt sind, wobei alle Stirnflächen im wesentlichen eben ausgebildet und im gleichen Drehsinn geneigt sind und wobei der Neigungswinkel der Stirnflächen, bezogen auf die Umfangsrichtung übereinstimmend 15 bis 75 °, bevorzugt 30 bis 60 ° beträgt. Herstellungsbedingte Zugspannungen, die einen gebrauchsdauerverringernden Einfluß auf gummielastische Werkstoffe haben, werden durch diese Ausgestaltung zuverlässig vermieden. Ein herstellungsbedingtes Schrumpfen der Stegkörper während der Vulkanisation bedingt keine Zugspannungen, sondern lediglich eine Relatiwerdrehung von Innenring und Außenring zueinander.

Hinsichtlich einer einfachen Fertigung und einer einfachen Montage des Stützlagers hat es sich als vorteilhaft bewährt, wenn die einander benachbarten Stegkörper ineinander übergehend ausgebildet und in Umfangsrichtung gleichmäßig verteilt sind. Der Außenring kann zumindest eine Durchbrechung aufweisen, die vom Werkstoff des Zwischenringes durchdrungen ist, wobei der Werkstoff des Zwischenrings auf der den Stegkörpern abgewandten Seite der Durchbrechung ineinander übergeht. Hierbei ist von Vorteil, daß eine sichere mechanische Festlegung des Zwischenrings am Außenring erfolgt, die auch während einer langen Gebrauchsdauer unverändert erhalten bleibt.

Zur Erzielung eines besonders teilearmen und in fertigungstechnischer und wirtschaftlicher Hinsicht günstigen Aufbaus können die Stegkörper in radialer Richtung innere und äußere Halteflächen aufweisen, wobei die inneren Halteflächen mit der Mantelfläche des Innenrings und die äußeren Halteflächen mit der Innenumfangsfläche des Außenringes adhäsiv verbunden sind. Die Verwendung zusätzlicher Stütz- und Versteifungsringe ist dadurch entbehrlich.

Zur Vermeidung von mechanischen Überbeanspruchungen der Stegkörper können auf den einander zugewandten Stirnflächen in Richtung der gegenüberliegenden Stirnfläche Anschlagnoppen vorgesehen sein. Große radiale und umfangsgerichtete Relativverlagerungen des Innen- und Außenrings zueinander können durch die an den Stirnflächen angeordneten Anschlagnoppen begrenzt werden, wobei die Anschlagnoppen auf der der Gegenanschlagfläche zugewandten Seite bevorzugt ein halbkugelförmiges Profil aufweisen, so daß eine Endlagendämpfung bei Berührung der Anschlagnoppen mit der Gegenanschlagfläche entsteht.

### Kurzbeschreibung der Zeichnungen

Das erfindungsgemäße Stützlager sowie das beanspruchte Verfahren zu seiner Herstellung werden nachfolgend anhand der beigefügten Zeichnungen näher erläutert. Diese zeigen Ausführungsbeispiele des Stützlagers in schematischer Darstellung.
- In Figur 1: ist ein erstes Ausführungsbeispiel des erfindungsgemäßen Stützlagers in einer Ansicht gezeigt.
- In Figur 2: ist das in Figur 1 gezeigte Ausführungsbeispiel in einem Schnitt entlang der Linie A-A in einem Ausschnitt im herstellungsbedingten Zustand gezeigt.
- In Figur 3: ist das Ausführungsbeispiel aus Figur 2 im gebrauchsfertigen Zustand nach vollständiger Abkühlung und Verfestigung des Zwischenrings gezeigt.

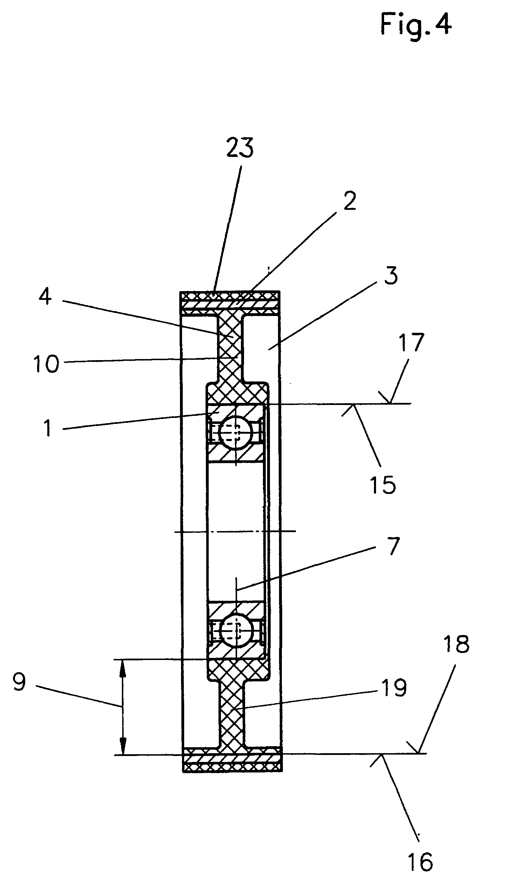

- In Figur 4: ist ein zweites Ausführungsbeispiel, ähnlich dem Ausführungsbeispiel aus Figur 1 gezeigt.

### Ausführung der Erfindung

Die beiden Ausführungsbeispiele des Lagers gelangen beispielsweise als Zwischenwellenlager für Kardanwellen von Kraftfahrzeugen zur Anwendung. Die Lager haben einen besonders teilearmen Aufbau, wobei die Stegkörper 10, 11, 19, 20 mit ihren inneren und äußeren Halteflächen 15, 16 direkt an die benachbarten Flächen von Innenring 1 und Außenring 2 anvulkanisiert sind. Der Innenring 1 ist in diesem Ausführungsbeispiel durch die äußere Lagerschale eines Wälzlagers gebildet, während der Außenring 2 als Stützring ausgebildet und im ersten Ausführungsbeispiel in einen Lagerbock einpreßbar ist.

Im zweiten Ausführungsbeispiel ist der Außenring 2 von einer Gummispur 23 außenumfangsseitig umschlossen, wobei die Gummispur 23 ihrerseits beispielsweise von einem Lagerbock unter elastischer Vorspannung umschlossen ist.

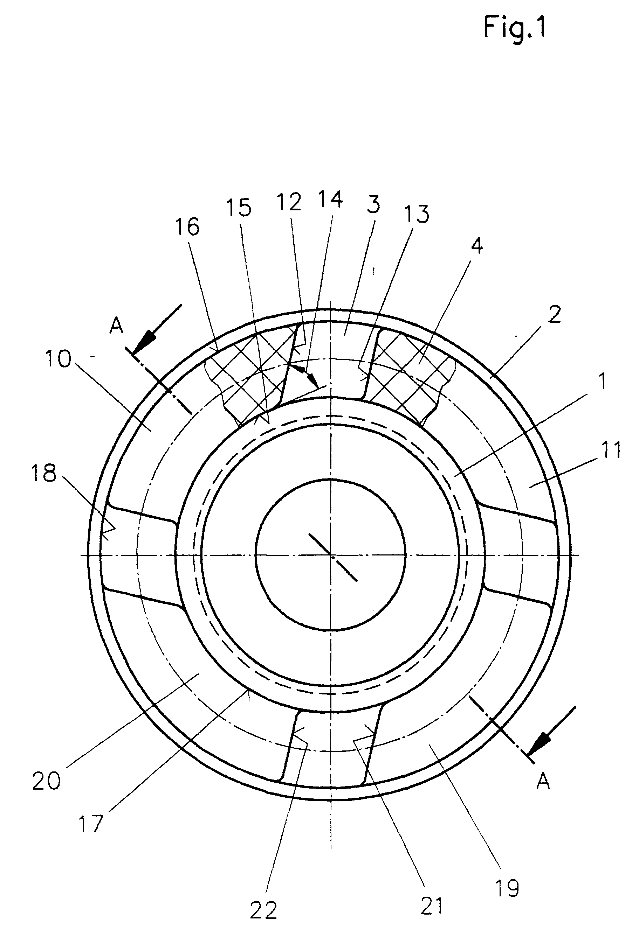

In Figur 1 ist ein Zwischenring 4 gezeigt, der mit seinen inneren Halteflächen 15 an der Mantelfläche 17 des Innenrings 1 angelegt ist und mit seinen äußeren Halteflächen 16 an der Innenumfangsfläche 18 des Außenrings 2. Der Zwischenring 4 umfaßt in diesem Ausführungsbeispiel vier gleichmäßig in Umfangsrichtung verteilte Stegkörper 10, 11, 19, 20 die mit ihren in Umfangsrichtung einander zugewandten Stirnflächen 12, 13, 21, 22 jeweils einen Spalt begrenzen. Die Stegkörper 10, 11, 19, 20 sind mit im wesentlichen ebenen Stirnflächen 12, 13, 21, 22 versehen, die alle im gleichen Drehsinn geneigt sind, wobei der Neigungswinkel 14, bezogen auf die Umfangsrichtung in diesem Ausführungsbeispiel übereinstimmend 45° beträgt. Zur Begrenzung der Relativverdrehung von Innen- und Außenring 1, 2 zueinander können die Stirnflächen 12, 13, 21, 22 mit hier nicht dargestellten Anschlagnoppen versehen sein, die im wesentlichen senkrecht zu den jeweils einander benachbarten Stirnflächen stehen.

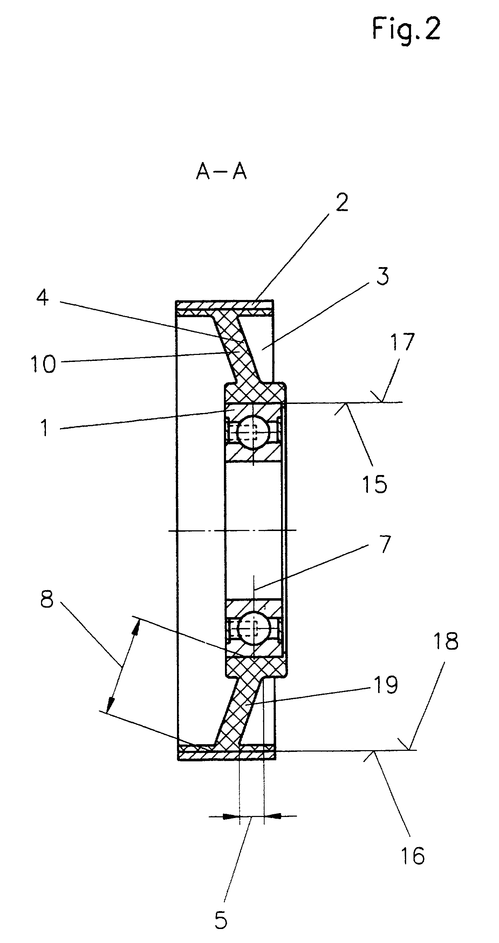

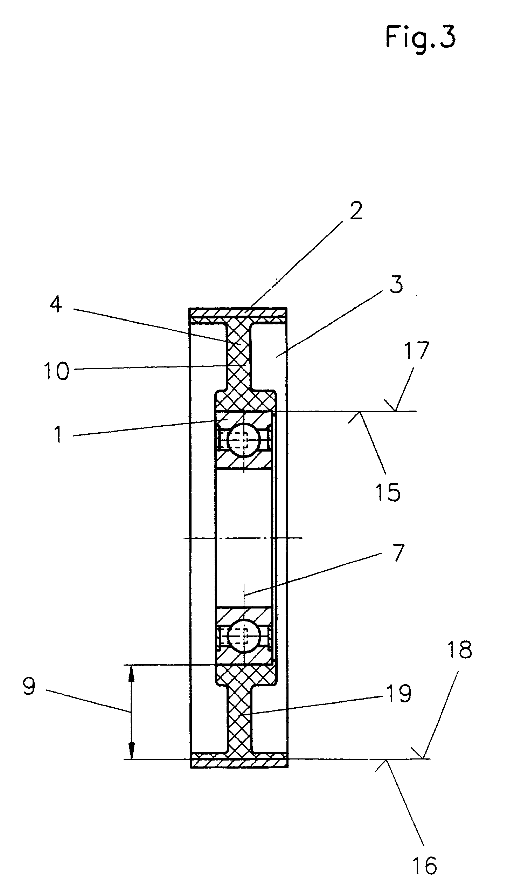

In den Figuren 2 und 3 ist jeweils ein Längsschnitt durch ein Stützlager gezeigt, wobei das Stützlager in Figur 2 im herstellungsbedingten, in Figur 3 demgegenüber im gebrauchsfertigen Zustand gezeigt ist.

In Figur 2 ist zu erkennen, daß der Innen- 1 und der Außenring 2 mit einem axialen Versatz 5 zueinander angeordnet sind. Der axiale Versatz 5 entspricht dem herstellungsbedingten Schrumpf des Zwischenrings 4 im Anschluß an seine Vulkanisation. Der Zwischenring ist in Figur 2 um den axialen Versatz 5 zu einer gedachten Radialebene 7 geneigt, wobei der axiale Versatz 5 sowie die Neigung zum besseren Verständnis der Erfindung übertrieben dargestellt sind. Während der Abkühlung und Verfestigung des Zwischenrings 4 im Anschluß an die Entnahme des Stützlagers aus dem Vulkanisationswerkzeug, schrumpft der Zwischenring 4, wobei sich die herstellungsbedingte Länge 8 auf die gebrauchsfertige Länge 9 verkürzt. Durch die in Umfangsrichtung unter dem Neigungswinkel 14 angeordneten Stegkörper 10, 11, 19, 20 und den Zwischenring 4 ohne radiale Zugspannungen, ist der Zwischenring 4 in allen Richtungen frei von gebrauchsdauerverringernden Zugspannungen und weist gleichbleibend gute Gebrauchseigenschaften während einer sehr langen Gebrauchsdauer auf.

## Patentansprüche

1. Verfahren zur Herstellung eines Stützlagers, umfassend einen Innenring (1), der mit radialem Abstand von einem Außenring (2) umschlossen ist, wobei der Innen-(1) und der Außenring (2) durch einen in dem durch den Abstand gebildeten Spalt (3) angeordneten Zwischenring (4) aus gummielastischem Werkstoff verbunden sind, **dadurch gekennzeichnet, daß** der Innen- (1) und der Außenring (2) mit einem dem herstellungsbedingten Schrumpf entsprechenden axialen Versatz (5) in ein Vulkanisationswerkzeug eingelegt werden, daß der Zwischenring (4), um den axialen Versatz (5) zu einer gedachten Radialebene (7)-geneigt, mit Innen- (1) und Außenring (2) vulkanisiert wird, daß das vulkanisierte Stützlager aus dem Vulkanisationswerkzeug entnommen wird und daß der axiale Versatz (5) zwischen Innen- (1) und Außenring (2) durch den herstellungsbedingt geneigten Zwischenring (4) während seiner Abkühlung und Verfestigung schrumpfbedingt selbsttätig vollständig ausgeglichen wird.

2. Verfahren nach Anspruch 1, **dadurch gekennzeichnet, daß** der Innen- (1) und der Außenring (2) mit einem axialen Versatz (5) von 0,1 bis 0,5 mm in das Vulkanisationswerkzeug eingelegt werden.

3. Stützlager, hergestellt nach dem Verfahren gemäß einem der Ansprüche 1 oder 2, umfassend einen Innenring (1), der mit radialem Abstand von einem Außenring (2) umschlossen ist, wobei der Innen-(1) und der Außenring (2) durch einen in dem durch den Abstand gebildeten Spalt (3) angeordneten Zwischenring (4) aus gummielastischem Werkstoff verbunden sind, **dadurch gekennzeichnet, daß** der Zwischenring (4) - im Längsschnitt betrachtet - herstellungsbedingt eine größere Länge (8, 9) aufweist, als im gebrauchsfertigen Zustand.

4. Stützlager nach Anspruch 3, **dadurch gekennzeichnet, daß** das Verhältnis der herstellungsbedingten Länge (8) zur Länge (9) im gebrauchsfertigen Zustand 1,05 bis 1,15 beträgt.

5. Stützlager nach einem der Ansprüche 3 oder 4, **dadurch gekennzeichnet, daß** der Zwischenring (4) durch zumindest zwei in Umfangsrichtung verteilte Stegkörper (10, 11, 19, 20) gebildet ist, die durch einen Umfangsabstand getrennt sind, daß die Stegkörper (10, 11, 19, 20) in Umfangsrichtung durch sich parallel zu der Stirnfläche eines benachbarten Stegkörpers erstreckende Stirnfläche (12, 13, 21, 22) begrenzt sind, daß alle Stirnflächen (12, 13, 21, 22) im wesentlichen eben ausgebildet sind und daß der Neigungswinkel (14) der Stirnflächen (12, 13, 21, 22) bezogen auf die Umfangsrichtung übereinstimmend 15 bis 75 ° beträgt.

6. Stützlager nach Anspruch 5, **dadurch gekennzeichnet, daß** der Winkel 30 bis 60° beträgt.

7. Stützlager nach einem der Ansprüche 5 oder 6, **dadurch gekennzeichnet, daß** die Stegkörper (10, 11, 19, 20) ineinander übergehend ausgebildet und in Umfangsrichtung gleichmäßig verteilt sind.

8. Stützlager nach einem der Ansprüche 5 bis 7, **dadurch gekennzeichnet, daß** die Stegkörper (10, 11, 19, 20) in radialer Richtung innere und äußere Halteflächen (15, 16) aufweisen und daß die inneren Halteflächen (15) mit der Mantelfläche (17) des Innenrings (1) und die äußeren Halteflächen (16) mit der Innenumfangsfläche (18) des Außenrings (2) adhäsiv verbunden sind.

9. Stützlager nach einem der Ansprüche 5 bis 8, **dadurch gekennzeichnet, daß** zumindest eine der einander zugewandten Stirnflächen (12, 13, 21, 22) mit einer Oberflächenprofilierung versehen ist.

10. Stützlager nach Anspruch 9, **dadurch gekennzeichnet, daß** die Oberflächenprofilierung durch in Richtung der gegenüberliegenden Stirnfläche vorstehende Anschlagnoppen gebildet ist.

## Claims

1. A method for producing a support bearing, comprising an inner ring (1) which is surrounded with radial clearance by an outer ring (2), the inner ring (1) and the outer ring (2) being connected by means of an intermediate ring (4) which is arranged in the gap (3) formed by the clearance and which is made from elastomeric material, **characterized in that** the inner ring (1) and the outer ring (2) are inserted, with an axial offset (5) corresponding to the shrinkage occurring as a consequence of production, into a vulcanizing die, **in that** the intermediate ring (4), inclined relative to an imaginary radial plane (7) by the amount of the axial offset (5), is vulcanized with the inner ring (1) and outer ring (2), **in that** the vulcanized support bearing is extracted from the vulcanizing die, and **in that** the axial offset (5) between the inner ring (1) and outer ring (2) is automatically compensated completely, as a consequence of shrinkage, by the intermediate ring (4), inclined as a consequence of production, during the cooling and solidification of the latter.

2. A method according to claim 1, **characterized in that** the inner ring (1) and the outer ring (2) are inserted into the vulcanizing die with an axial offset (5) of 0.1 to 0.5mm.

3. A support bearing, produced by the method according to either one of claims 1 and 2, comprising an inner ring (1) which is surrounded with radial clearance by an outer ring (2), the inner ring (1) and the outer ring (2) being connected by means of an intermediate ring (4) which is arranged in the gap (3) formed by the clearance and which is made from elastomeric material, **characterized in that**, as seen in longitudinal section, the intermediate ring (4) has, as a consequence of production, a greater length (8, 9) than in the ready-to-use state.

4. A support bearing according to claim 3, **characterized in that** the ratio of the length (8) as a consequence of production to the length (9) in the ready-to-use state is 1.05 to 1.15.

5. A support bearing according to any one of claims 3 and 4, **characterized in that** the intermediate ring (4) is formed by at least two web bodies (10, 11, 19, 20) which are distributed in the circumferential direction and are separated by a circumferential clearance, **in that** the web bodies (10, 11, 19, 20) are limited in the circumferential direction by end faces (12, 13, 21, 22) extending parallel to the end face of an adjacent web body, **in that** all the end faces (12, 13, 21, 22) are of essentially plane design, and **in that** the angle of inclination (14) of the end faces (12, 13, 21, 22) with respect to the circumferential direction is identically 15-75°.

6. A support bearing according to claim 5, **characterized in that** the angle is 30 to 60°.

7. A support bearing according to any one of claims 5 and 6, **characterized in that** the web bodies (10, 11, 19, 20) are designed to merge one into another and are distributed uniformly in the circumferential direction.

8. A support bearing according to any one of claims 5 to 7, **characterized in that** the web bodies (10, 11, 19, 20) have inner and outer holding faces (15, 16) in the radial direction, and **in that** the inner holding faces (15) are connected adhesively to the cylindrical surface (17) of the inner ring (1) and the outer holding faces (16) are connected adhesively to the inner circumferential surface (18) of the outer ring (2).

9. A support bearing according to any one of claims 5 to 8, **characterized in that** at least one of the end faces (12, 13, 21, 22) facing one another is provided with a surface profiling.

10. A support bearing according to claim 9, **characterized in that** the surface profiling is formed by stop bosses projecting in the direction of the opposite end face.

## Revendications

1. Méthode de fabrication d'un palier comprenant une bague intérieure (1) entourée à distance radiale d'une bague extérieure (2), les bagues intérieure (1) et extérieure (2) étant reliées par une bague intermédiaire (4) en gomme élastique agencée dans l'interstice (3) formé par la distance, **caractérisée en ce que** les bagues intérieure (1) et extérieure (2) sont placées dans un outil de vulcanisation avec un déport axial (5) correspondant au retrait dû à la fabrication, **en ce que** la bague intermédiaire (4), inclinée dudit déport axial (5) par rapport à un plan radial (7) imaginaire, est vulcanisée sur les bagues intérieurs (1) et extérieure (2), **en ce que** le palier vulcanisé est retiré de l'outil de vulcanisation et **en ce que** le déport axial (5) entre les bagues intérieure (1) et extérieure (2) est automatiquement et totalement compensé par la bague intermédiaire (4) inclinée pour des raisons de fabrication, grâce au retrait pendant son refroidissement et durcissement.

2. Méthode selon la revendication 1, **caractérisée en ce que** les bagues intérieure (1) et extérieure (2) sont placées dans l'outil de vulcanisation avec un déport axial (5) compris entre 0,1 et 0,5 mm.

3. Palier fabriqué suivant la méthode selon l'une des revendications 1 ou 2, comprenant une bague intérieure (1) entourée à distance radiale d'une bague extérieure (2), les bagues intérieure (1) et extérieure (2) étant reliées par une bague intermédiaire (4) en gomme élastique agencée dans l'interstice (3) formé par la distance, **caractérisé en ce que** la bague intermédiaire (4) - vue en coupe longitudinale - possède pour des raisons de fabrication une longueur (8, 9) plus importante qu'à l'état prêt à l'emploi.

4. Palier selon la revendication 3, **caractérisé** en que le rapport entre la longueur (8) due à la fabrication et la longueur (9) à l'état prêt à l'emploi est compris entre 1,05 et 1,15.

5. Palier selon l'une des revendications 3 ou 4, **caractérisé en ce que** la bague intermédiaire (4) est formée par au moins deux entretoises (10, 11, 19, 20) réparties dans le sens circonférentiel, qui sont séparées par une distance circonférentielle, **en ce que** les entretoises (10, 11, 19, 20) sont limitées dans le sens circonférentiel par des faces (12, 13, 21, 22) s'étendant parallèlement à la face d'une entretoise voisine, **en ce que** toutes les faces (12, 13, 21, 22) sont de forme essentiellement plane et **en ce que** l'angle d'inclinaison (14) des faces (12, 13, 21, 22) par rapport au sens circonférentiel est compris, de manière concordante, entre 15 et 75°.

6. Palier selon la revendication 5, **caractérisé en ce que** l'angle est compris entre 30 et 60°.

7. Palier selon l'une des revendications 5 ou 6, **caractérisé en ce que** les entretoises (10, 11, 19, 20) sont réalisées de manière à se fondre l'une dans l'autre et qu'elles sont réparties uniformément dans le sens circonférentiel.

8. Palier selon l'une des revendications 5 à 7, **caractérisé en ce que** les entretoises (10, 11, 19, 20) possèdent des surfaces de maintien intérieures et extérieures (15, 16) dans le sens radial et **en ce que** les surfaces de maintien intérieures (15), par adhésion, sont solidaires de la surface latérale (17) de la bague intérieure (1) et les surfaces de maintien extérieures (16) de la surface circonférentielle intérieure (18) de la bague extérieure (2).

9. Palier selon l'une des revendications 5 à 8, **caractérisé en ce qu'**au moins une des faces (12, 13, 21, 22) se faisant face est pourvue d'un profilage de surface.

10. Palier selon la revendication 9, **caractérisé en ce que** le profilage de surface est formé par des butoirs faisant saillie en direction de la face opposée.
